# EUROPEAN PATENT SPECIFICATION

(11) **EP 1 441 875 B1**
(45) Date of publication and mention of the grant of the patent: **03.01.2007**
(21) Application number: 02773041.5
(22) Date of filing: 04.11.2002
(51) Int. Cl.: B23K 35/30, B23K 10/02

(54) **HEAT-RESISTANT STEEL TYPES HAVING IMPROVED RESISTANCE TO CATALYTIC CARBONIZATION AND COKING**
HITZEBESTÄNDIGER STAHL MIT VERBESSERTER KATALYTISCHER KARBONATATIONS- UND VERKOKUNGSBESTÄNDIGKEIT
TYPES D'ACIER RESISTANT AUX HAUTS TEMPERATURES PRESENTANT UNE RESISTANCE AMELIOREE A LA CARBONISATION ET AU COKAGE (CATALYTIQUES)

(30) Priority: 09.11.2001 NL 1019344
(43) Date of publication of application: 04.08.2004
(73) Proprietor: Nederlandse Organisatie voor Toegepast-Natuurwetenschappelijk Onderzoek TNO, 2628 VK Delft (NL)
(72) Inventor: VAN WORTEL, Johannes, Cornelis, NL-6971 GA Brummen (NL)
(74) Representative: Winckels, Johannes Hubertus F.
(86) International application number: PCT/NL2002/000699
(87) International publication number: WO 2003/039805

(56) References cited:
- EP-A- 1 043 084
- EP-A- 1 338 663
- FR-A- 1 515 486
- GB-A- 1 461 748
- US-A- 4 404 049
- US-A- 4 685 427
- US-A- 5 873 951
- US-A1- 2001 013 383
- DAMBORENEA DE J ET AL: "OXIDATION RESISTANCE OF LASER CLADDING BY NI-CR-AL ALLOYS ON CARBONAND AUSTENITIC STEINLESS STEELS" WELDING INTERNATIONAL, WELDING INSTITUTE. ABINGTON, GB, vol. 10, no. 1, 1996, pages 51-56, XP000542542 ISSN: 0950-7116

## Description

The invention relates to components manufactured from heat-resistant metal, in particular tubes such as furnace tubes, which are provided on at least one side with a welded-on layer for improving the resistance to (catalytic) carbonization and coking at temperatures above 500°C.

In the process industry, much use is made of heat-resistant types of steel. Examples include wrought or cast tubes which are used in carburization hardening furnaces, appliances for the direct production of iron, ammonia production plants, as well as hydrogen and ethylene furnaces. There is a large variety in heat-resistant steel types that differ in chemical composition. The four chief elements of heat-resistant types of steel are C, Fe, Ni and Cr. To further enhance the creep strength at high temperatures, in addition, minor amounts of other elements are added, such as Al, Si, Ti and Zr.

Although for most applications special alloys are used in order to improve the chemical resistance of the heat-resistant steel, the chemical resistance is usually susceptible of improvement.

In particular in areas of application where at temperatures above 500°C the process medium comprises hydrocarbons, three specific degradation processes can arise.

Thus, at temperatures between ca. 500 and 1200°C, carbonization of the steel can arise. This involves diffusion of the carbon from the process medium into the metal, whereby metal carbides are formed. In the course of time, this results in a reduction of the corrosion resistance and in a reduction of the toughness, or an increase of the brittleness of the steel, which eventually leads to failure, thus necessitating replacement of the steel.

Another phenomenon that arises especially when the steel is contacted with synthesis gas (a mixture of CO/CO₂ and H₂/H₂O) concerns so-called metal dusting. At temperatures of 450 to 900°C, as a result of catalytic coking/carbonization, which processes are accelerated especially by the Fe present in the steel, decomposition of the steel can arise, whereby isolated metal particles and graphite are formed. The metal thereby decomposes completely (dusting), sometimes even within a few weeks, so that the material must be replaced.

Catalytic coking is another process that can give rise to serious problems in process management. Catalytic coking can arise especially at temperatures of 900 to 1200°C, in particular in the tubing of ethylene cracking plants. Coke deposition is the result of disintegration of hydrocarbons, whereby carbon is deposited on the metal surface. This leads to a decrease of the cross-sectional area of the tubes through which medium can flow, and eventually even to a complete clogging of the tubes. Moreover, heat transport through the tubes is rendered more difficult by the deposition of coke. To compensate for this, more heat must be supplied, in order to enable the desired processes to proceed all the same. In addition to higher energy costs, this leads to higher metal temperatures, so that the lifetime of the tubes is considerably shortened. To remove the grown-on carbon, at specified times so-called decoking runs are to be performed, but this entails the disadvantage that production must be interrupted. If the time period between decoking runs can be prolonged, this yields very great savings. The coke deposition constitutes an additional problem in view of the difference in coefficient of thermal expansion between the coke and the metal. As a result, upon cooling, in particular if this happens fast, the tubes may crack or break.

The above-mentioned phenomena underlying the most common forms of decrease of chemical resistance occur more vigorously at higher temperatures. This is disadvantageous especially because the trend in most chemical conversions performed on an industrial scale is generally to perform the reactions at a higher temperature for the sake of process economy. For this reason, much research has been done on new materials having improved chemical resistance, especially resistance to catalytic coking.

EP-A-1 043 084 describes heat-resistant metal tubes which are provided with a layer of a specific Cr-Ni-Mo alloy applied by welding. According to this publication, these known tubes are especially suitable to be deployed in processes where coke deposition plays a role. According to this publication, the content of Si in the layer should not be more than 1.5 wt.%.

The object of the present invention is to provide method for manufacturing a material having an improved resistance to (catalytic) carbonization and coking, for plants operating at temperatures above *ca.* 500°C. It has been found that this can be achieved by providing a heat-resistant metal with a special alloy, which is applied by welding. Accordingly, the present invention relates to a method for manufacturing a heat-resistant steel having improved resistance to (catalytic) coking and carbonization comprising the application of a layer through plasma powder are welding (PPAW) or plasma transfer are welding (PTA) starting from a powder mixture comprising 50-70 wt% Ni, 20-50 wt% Cr, and 5-15 wt% of a third component, said third component being Al, Si, or a mixture thereof, wherein said applied layer comprises 30-60 wt% Ni, 15-35 wt% Cr, 0-25 wt% Fa, and 3-13 wt% of said third component. The application of the layer is done by so-called powder welding. In this technique known per se, a powdered mixture of metal particles (particle size typically 60-160 µm) is guided by way of a carrier gas to the plasma arc of a welding device. In the plasma arc, the powder mixture is melted up and the melt is deposited on the workpiece, where the weld is formed. For the purpose of applying layers according to the invention, the powder welding can be automated. For treating inner surfaces of tubes, the torch of the welding device can be placed at the terminal end of a guide. The supply lines for gas, powder, power, and cooling of the torch are then passed along the guide. The guide has a length such that it can be moved into the tube to be treated. By slowly rotating the tube and displacing it in the longitudinal direction, the entire inner surface of the tube can be treated. In this manner, tubes having a length of up to 10 meters or more can be treated.

Suitable welding techniques for the present invention are known to the skilled person as plasma powder arc welding (PPAW) or plasma transfer arc welding (PTA). The difference between PPAW and PTA resides in particular in the placement of the positive electrode. In PTA, the positive electrode is placed on the workpiece. In PPAW the positive electrode is connected to the nozzle of the torch, so that with PPAW in principle also non-electrically conductive materials can be welded. For the present invention, both methods (PPAW and PTA) are suitable.

The optimum setting of the welding parameters (including type of gas, distance of nozzle to the workpiece, plasma current, plasma voltage, supply rate of the powder mixture, welding speed, welding pattern, metal preheat temperature and maximum metal temperature) during welding naturally depends on the conditions, *inter alia* on the material to which the layer is applied. The skilled person is able to find the optimum setting in each individual case.

As plasma gas, shielding gas and carrier gas (for supplying the powder mixture), in principle any conventional gas for powder welding can be used. Preferably, for all three gases the same composition is chosen, such as argon. For a typical heat-resistant steel with 25%Cr, 35%Ni, balance Fe, the following settings for the welding parameters are very suitable.

| **welding parameter** | **value** | **preferred value** |
|---|---|---|
| plasma gas | argon | argon |
| shielding gas | argon | argon |
| carrier gas | argon | argon |
| nozzle-to-workpiece distance | 5-15 mm | 6-12 mm |
| plasma current | 60-200 A | 80-160 A |
| plasma voltage | 12-40 V | 15-35 V |
| powder mixture supply rate | 4-50 g/min | 5-40 g/min |
| welding speed | 5-80 cm/min | 10-60 cm/min |
| welding mode | string or weave | string or weave |
| preheat temperature | 20-350°C | 20-300°C |
| max. metal temperature during welding | 450°C | 400°C |

The powder composition is selected such that the applied layer comprises 30-60 wt.% Ni, 15-35 wt.% Cr, 0-25 wt.% Fe, and 3-13 wt.% of the third component (Al and/or Si). In order to obtain such a layer, the starting point is an Ni-Cr-[Al and/or Si] powder mixture which contains 50-70 wt.% Ni, 20-50 wt.% Cr and 5-15 wt.% of the third component. The particle size of the powder is typically 60-160µm. All components of the powder mixture are present in metallic form.

According to the invention, the thickness of the layer is preferably at least 1 mm, more preferably at least 1.5 mm. Normally, the layer is not thicker than 4 mm.

The layer obtained according to the invention exhibits excellent bonding to the substrate, without this requiring a supplemental heat treatment. According to the invention, the layer can be applied without unallowable cracks or porosities being formed.

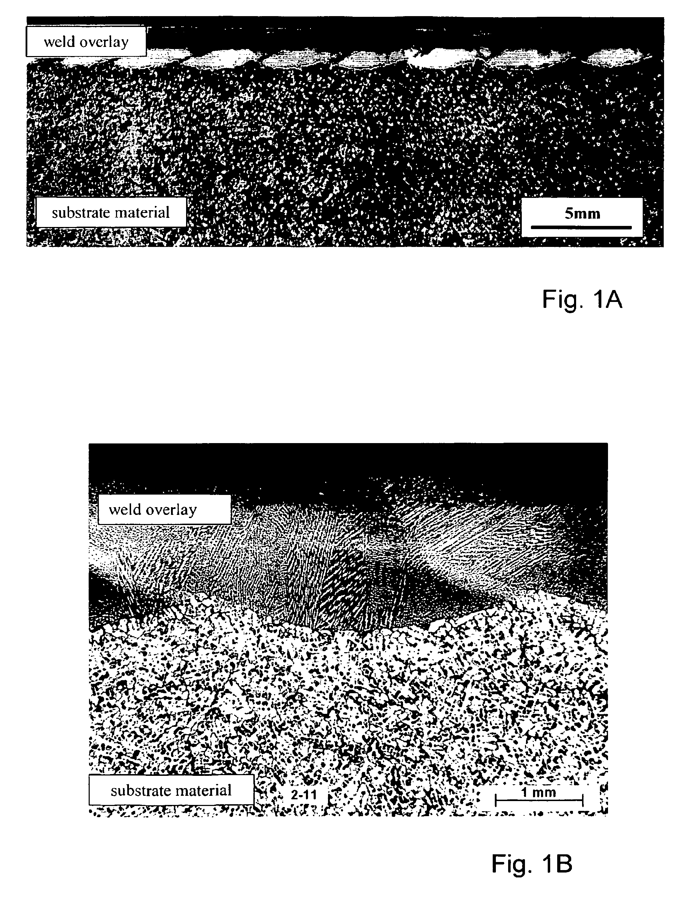

Figure 1 shows a cross section of a layer according to the invention as viewed under the light microscope. The layer is present here at the top of the figure. It appears from this figure that an excellent bonding to the substrate is obtained.

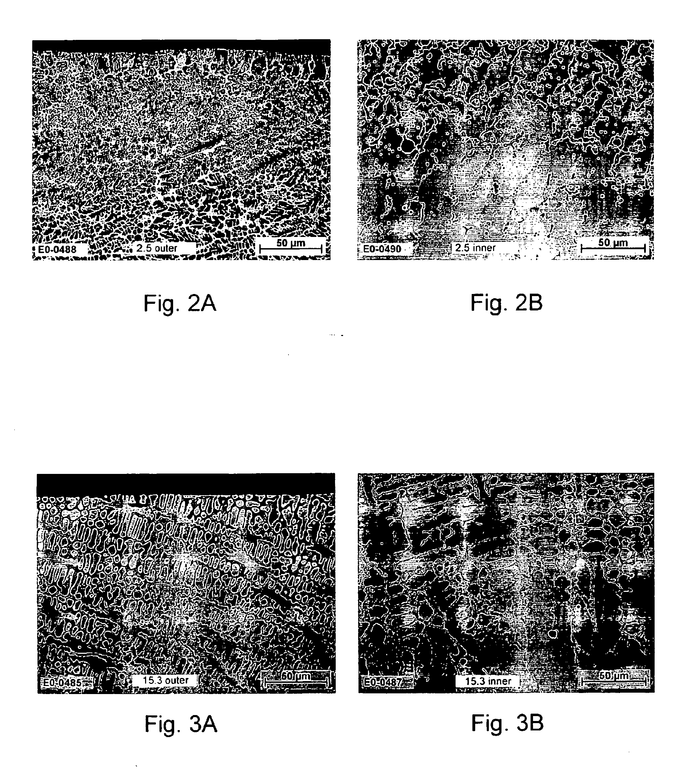

Figures 2 and 3 show recordings of a raster electron microscope of cross sections of a layer according to the invention with Al (Figure 2) and Si (Figure 3). Figures 2A and 3A show the outer side of the layer and Figures 2B and 3B show the transition between the layer and the substrate (this transition is roughly located at the bottom of each of the figures). These figures also evidence the excellent bonding of the weld overlay to the substrate. Nor are any cracks present.

Analysis with a raster electron microscope and a light microscope demonstrates that the alloy formed is not entirely austenitic; there are also many intermetallic compounds present (see Figure 2A and 3A). The structure consists of an austenitic matrix (white) and complex intermetallic compounds (dark).

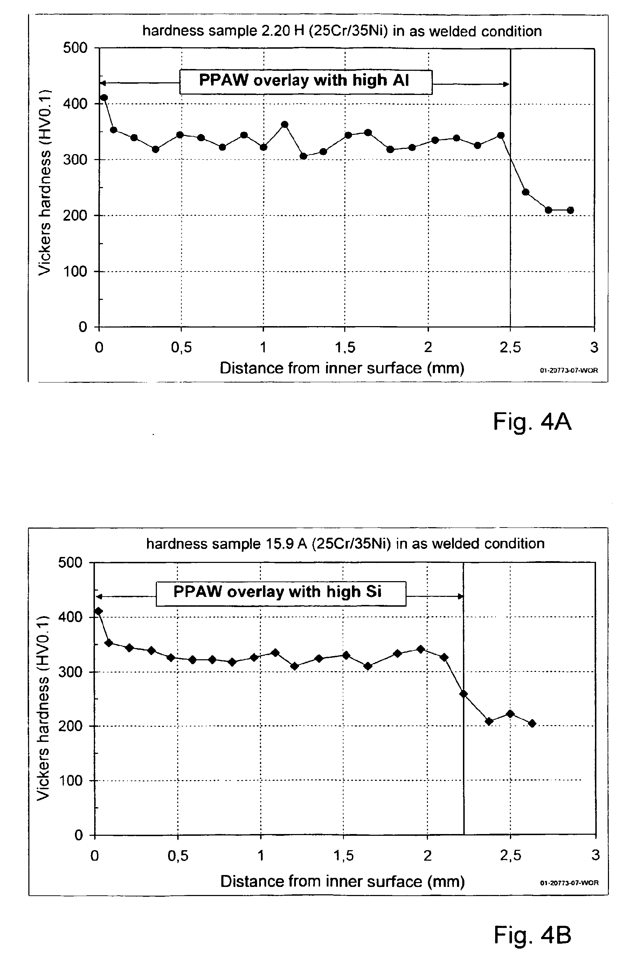

Figure 4 shows the trend of the average (Vickers) hardness of heat-resistant steel (25Cr/35Ni) surfaces treated according to the invention with PPAW, utilizing a powder comprising A1 (Figure 4A) and Si (Figure 4B). Figure 4 shows that the hardness of the surfaces is ca. 150 points higher than that of the substrate material (HV 350 versus HV 200). By virtue of the higher hardness, the high-temperature erosion resistance of these layers is better than that of uncovered substrate material.

Chemical analysis of the layer demonstrates that the Si and/or the Al is/are present metallically and not as oxide. According to the invention, the amount of Fe in the layer is limited; a sloping Fe-profile emerges which is high on the steel side (substrate side) and decreases strongly in the direction of the outer surface of the layer. This means that mixing of Fe from the substrate with the layer is limited. The limited Fe content of the layer is especially of interest because in this way, when applying the component with the weld overlay according to the invention in chemical appliances, catalytic coke deposition can be prevented.

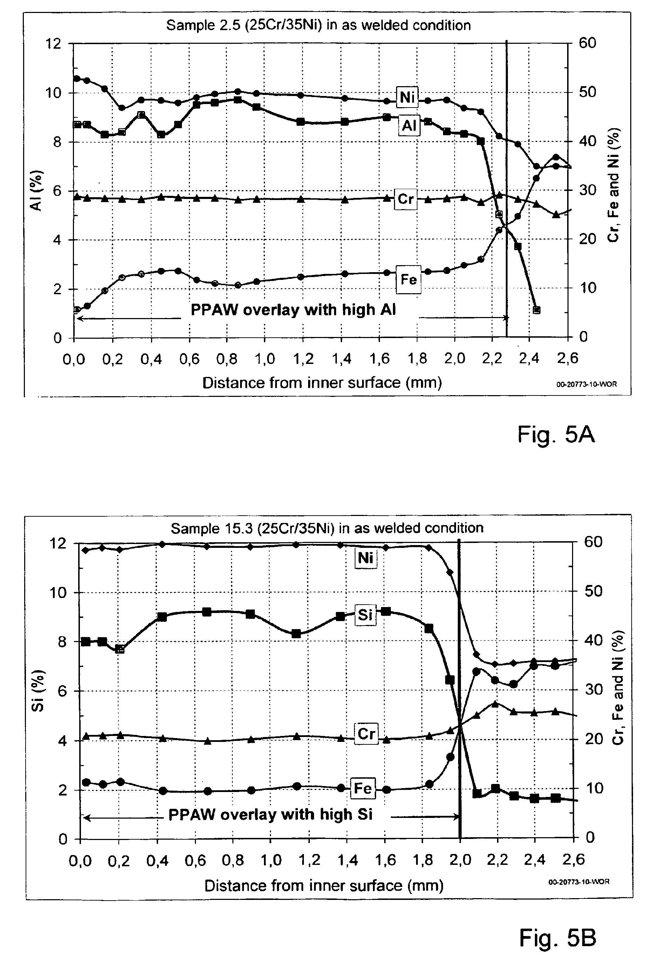

Figure 5A shows the chemical composition of the layer with high Al, applied in accordance with the invention to the inner side of the tube wall of a heat-resistant alloy with 25%Cr, 35%Ni, balance Fe. The chemical composition has been determined with the aid of a raster electron microscope (REM) in combination with an energy dispersive spectrometer (EDX). Figure 5B shows the chemical composition for a layer with Si according to the invention. It appears from Figure 5 that Ni and Al/Si in the layers are strongly increased, while the Fe content is strongly reduced. The Fe profile decreases rapidly in the direction of the outer surface (in Figure 5 to the left).

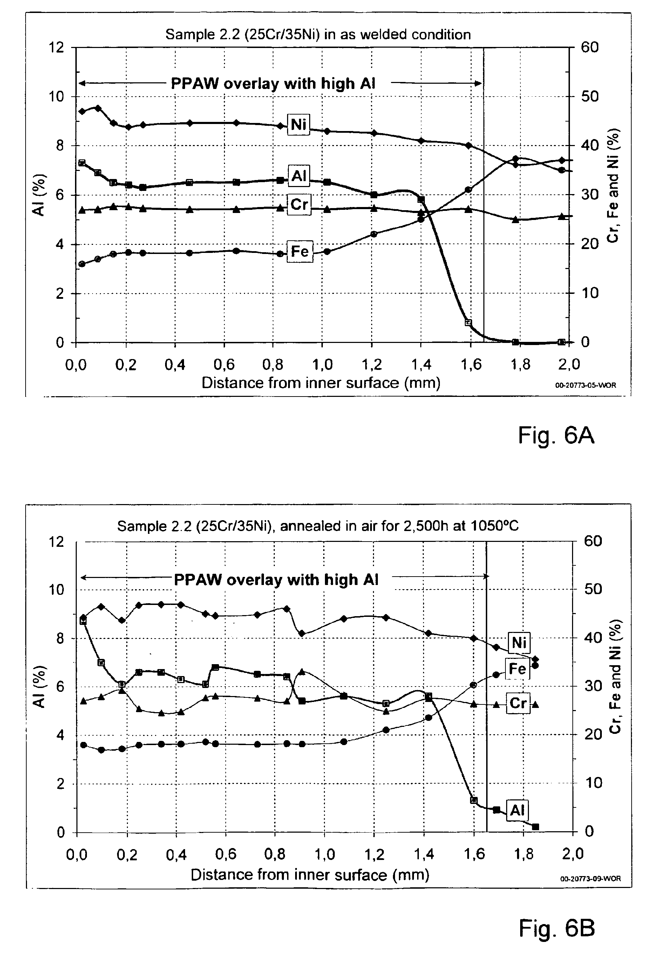

The favorable properties of the components obtained according to the invention are retained, even after prolonged exposure to process conditions which, with conventional, untreated surfaces, give rise to the above-mentioned degradation processes. Figure 6 shows the chemical composition of a layer with Al before (Figure 6A) and after exposure (Figure 6B) to air for 2500 hours at 1050°C.

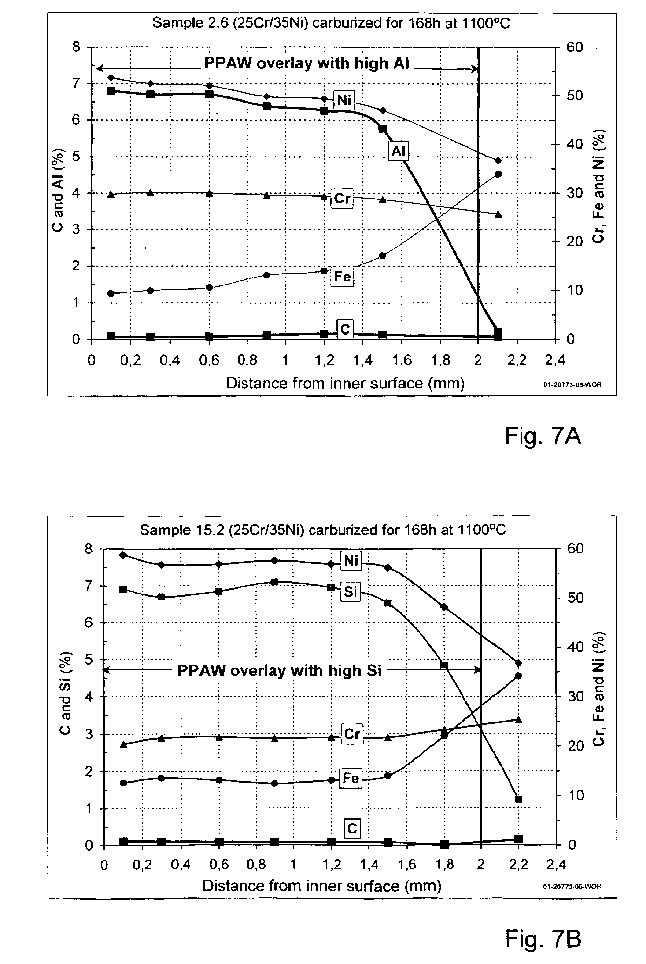

Exposure under carburizing conditions (that is, to hydrocarbons at a temperature of 1000°C or more) shows that the layer according to the invention picks up no carbon or just a very minor amount. Figures 7A (Al) and 7B (Si) again show chemical profiles of layers according to the invention after exposure to carburizing conditions for 168 hours at 1100°C. These figures show that no carbon is incorporated into the layer.

The components provided with a weld overlay as obtained according to the invention can be applied particularly well in the chemical process industry, in particular as tubes in furnaces, for instance for the production of ethylene. Also manufactured with advantage from the material obtained according to the invention are components that are utilized under conditions giving rise to metal dusting, for instance ammonia production plants. Other possible applications according to the invention concern, for instance, tubes for waste incineration plants operating above 500°C and typically involving a high content of Cl. The extra investment costs to be incurred for manufacturing the components according to the invention compare favorably with the advantages thereby obtained. As a result of the improved resistance to (catalytic) carbonization and coking of the components, a longer continuous operating time can be obtained and the objects in question need to be replaced less often.

The invention will now be elucidated in and by two examples.

### Example 1: Application and behavior of a welded Cr-Ni-Al powder on a heat-resistant cast alloy with 25%Cr, 35%Ni, balance Fe

Substrate material: cast tube having an outside diameter of 160 mm and a wall thickness of 8 mm. The selected alloy is characteristic of an ethylene furnace. The PPAW weld overlays were welded in one layer utilizing the above-mentioned conditions on the inside of the tubes. Use was made of an Ni-Cr-Al powder.

After welding, cross sections were made and it was established that no cracks were present. Figure 2 shows the results. Also, the layer thicknesses were determined and with REM/EDX the trend in the composition of the layers was determined. The results are shown in Figure 5. Next, the lengths of tube with the weld overlays were exposed in air for up to 2500h at a maximum, for the purpose of determining the high-temperature stability of the layers. The composition of the layers before and after exposure was determined on cross sections with the REM/EDX. Figure 6 shows the results.

Finally, carburization tests were performed between 1000 and 1100°C to determine whether the weld overlays could prevent the diffusion of carbon. The carburization behavior was determined on cross sections. Use was made of the REM/EDX and also, for determining the carbon content, of spark spectroscopy (OES). Figure 7 shows that after the carburization tests the carbon content in the layer remains extremely low.

### Example 2: Application and behavior of a welded Cr-Ni-Si powder on a heat-resistant cast alloy with 25%Cr, 35%Ni, balance Fe

Example 1 was repeated, but now Ni-Cr-Si powder was used instead of Ni-Cr-Al powder.

Here, too, it was established that no cracks were present in the weld overlay. Figure 2 shows the results. The trend in composition of the layers is again shown in Figure 5.

These lengths of tube with the weld overlays were exposed to the air in the same manner as in Example 1. The composition of the layers before and after exposure (determined with REM/EDX) is again shown in Figure 6.

Carburization tests were also performed as described in Example 1. Figure 7 shows again that after the carburization tests, the carbon content in the layer remains extremely low.

It follows from these examples that according to the invention metallic layers can be applied with superior bonding to the substrate material. Under high-temperature carbonizing conditions, the layers are resistant to carbonization, as a result of which the underlying substrate material is wholly protected from carbonization.

## Claims

1. A method for manufacturing a heat-resistant steel having improved resistance to coking and carbonization, comprising the application of a layer through plasma powder arc welding (PPAW) or plasma transfer arc welding (PTA), starting from a powder mixture comprising 50-70 wt.% Ni, 20-50 wt.% Cr, and 5-15 wt.% of a third component, said third component being Al, Si, or a mixture thereof, wherein said applied layer comprises 30-60 wt.% Ni, 15-35 wt.% Cr, 0-25 wt.% Fe, and 3-13 wt.% of said third component.

2. A method according to claim 1, wherein said third component is Si.

3. A method according to claim 1, wherein said third component is Al.

## Patentansprüche

1. Verfahren zur Herstellung von hitzebeständigem Stahl mit verbesserter Beständigkeit gegenüber Verkokung und Verkohlung, das die Aufbringung einer Schicht mittels Plasmapulverbogenschweißung (PPAW) oder Plasmatransferbogenschweißung (PTA) umfasst, wobei von einer Pulvermischung ausgegangen wird, die 50 bis 70 Gew.-% Ni, 20 bis 50 Gew.-% Cr und 5 bis 15 Gew.-% einer dritten Komponente umfasst, die dritte Komponenten Al, Si oder eine Mischung derselben ist, und die aufgebrachte Schicht 30 bis 60 Gew.-% Ni, 15 bis 35 Gew.-% Cr, 0 bis 25 Gew.-% Fe und 3 bis 13 Gew.-% der dritten Komponente umfasst.

2. Verfahren nach Anspruch 1, bei dem die dritte Komponente Si ist.

3. Verfahren nach Anspruch 1, bei dem die dritte Komponente Al ist.

## Revendications

1. Procédé pour fabriquer un acier résistant à la chaleur ayant une résistance améliorée à une cuisson et une carbonisation, comportant l'application d'une couche par l'intermédiaire d'un soudage plasma à arc sous flux en poudre (PPW) ou soudage plasma à arc transféré (PTA), en commençant par un mélange poudreux comportant 50 à 70 % en poids de Ni, 20 à 50 % en poids de Cr, et 5 à 15 % en poids d'un troisième composant, ledit troisième composant étant Al, Si, ou un mélange de ceux-ci, dans lequel ladite couche appliquée comporte 30 à 60 % en poids de Ni, 15 à 35 % en poids de Cr, 0 à 25 % en poids de Fe, et 3 à 13 % en poids dudit troisième composant.

2. Procédé selon la revendication 1, dans lequel ledit troisième composant est Si.

3. Procédé selon la revendication 1, dans lequel ledit troisième composant est Al.
